# EUROPÄISCHE PATENTSCHRIFT

(11) **EP 1 334 876 B1**
(45) Veröffentlichungstag und Bekanntmachung des Hinweises auf die Patenterteilung: **13.07.2005**
(21) Anmeldenummer: 03002713.0
(22) Anmeldetag: 06.02.2003
(51) Int. Cl.: B60R 5/04, B60R 21/06

(54) **Sicherheitsnetz zur Abtrennung eines Laderaums von einer Fahrgastzelle in einem Kraftfahrzeug**
Safety net for separating the luggage space from the passenger compartment in a motor vehicle
Filet de sécurité pour séparer le compartiment à baggages du compartiment passagers dans un véhicule automobile

(30) Priorität: 07.02.2002 DE 10205166
(43) Veröffentlichungstag der Anmeldung: 13.08.2003
(73) Patentinhaber: BOS GmbH & Co. KG, 73760 Ostfildern (DE)
(72) Erfinder: Sitzler, Wolfgang, 42111 Wuppertal (DE); Salewski, Jürgen, 40599 Düsseldorf (DE)
(74) Vertreter: Patentanwälte Ruff, Wilhelm, Beier, Dauster & Partner

(56) Entgegenhaltungen:
- EP-A- 1 177 948
- DE-A- 19 650 768
- DE-A- 19 748 595
- DE-A- 19 949 417

## Beschreibung

Die Erfindung betrifft eine Kfz-Sicherheitseinrichtung, insbesondere ein Sicherheitsnetz zur Abtrennung eines Laderaums von einer Fahrgastzelle.

Üblicherweise sind Kfz-Sicherheitseinrichtungen mit einem Rollogehäuse im Bereich der Rückseite der hinteren Rückenlehne eines Kfz's angeordnet. Eine als Sicherheitsnetz ausgebildete Sicherheitseinrichtung kann in eine im wesentlichen vertikale Position ausgezogen werden, so daß sie den zwischen dem oberen Rand der hinteren Rückenlehne und dem Dachhimmel verbleibenden Freiraum verschließt. Auf diese Weise kann beispielsweise bei einer starken Abbremsung des Kfz's verhindert werden, daß in dem Laderaum angeordnete Gegenstände aus dem Kfz-Laderaum in die Fahrgastzelle hinein geschleudert werden.

Zur Befestigung einer an dem freien Endbereich des Sicherheitsnetzes angeordneten Haltestange werden die Haltestangenenden üblicherweise in Kfz-seitige Aufnahmen eingehängt. Eine umständliche Handhabung ist insbesondere dann gegeben, wenn beispielsweise schlüssellochartige Aufnahmen vorgesehen sind, in die hinein die Befestigungsabschnitte des Endelementes eingefädelt werden müssen. Weil ein Benutzer üblicherweise weit nach vorne gebeugt diesen Einhängvorgang durchführt, und in dieser ausgezogenen Position des Netzes üblicherweise eine Rückzugskraft eines Federmotors auf das Netz ausgeübt wird, ist der Einhängvorgang für einen Benutzer z.T. derart unangenehm oder mühselig, daß auf das Einhängen des Sicherheitsnetzes vollständig verzichtet wird, was zu einer erhöhten Gefährdung der Fahrzeuginsassen führt.

Aus der DE 196 50 768 C2 ist eine Sicherheitsnetzanordnung bekannt, bei der eine Sperreinrichtung dazu eingerichtet ist, ein erneutes Aufwickeln des ausgezogenen Sicherheitsnetzes auf die Wickelwelle zu sperren. Der Benutzer soll hier durch Ausschaltung der Kraft des Federmotors den Zugstab auf erleichterte Weise in die Aufnahmetaschen einhängen können.

Ein anderes Prinzip verfolgte die Anmelderin bereits mit einer Trenn- oder Rückhaltevorrichtung gemäß der DE 199 49 417 C2. Hieraus ist es bekannt, Haltestangenenden in einer Aufnahmehalterung durch eine lösbare Steckverbindung zu befestigen. Dementsprechend ist dort ein Einführtrichter vorgesehen, auf dessen Trichterboden ein Steckelement angeordnet ist, mit dem ein von dem entsprechenden Haltestangenende gebildetes komplementäres Steckelement zusammenwirkt. Dem Haltestangenende ist ein insbesondere translatorisch bewegliches Riegelelement zugeordnet, welches mindestens mittelbar auf oder an dem Haltestangenende geführt und in seine Verriegelungsstellung hinein federbelastet ist.

Eine gattungsgemäße Sicherheitseinrichtung ist in der DE 197 48 595 A offenbart, wobei eine Haltestange eines Sicherheitsnetzes von zwei verlagerbaren Sperrelementen verschließbar ist.

Ausgehend von der Kfz-Sicherheitseinrichtung gemäß der DE 197 48 595 A besteht die Aufgabe der Erfindung im wesentlichen darin, die bekannte Kfz-Sicherheitseinrichtung derart weiter zu entwickeln, daß sie bei maximaler Sicherheit einen einfachereren Aufbau und eine einfache Handhabung, insbesondere ein einfacheres Lösen der Haltestange ermöglicht.

Die Erfindung löst diese Aufgabe im wesentlichen mit den Merkmalen des Anspruches 1. Demnach ist eine Kfz-Sicherheitseinrichtung, insbesondere ein Sicherheitsnetz zur Abtrennung eines Laderaumes von einer Fahrgastzelle vorgesehen, mit einer von einer Wickelwelle abziehbaren Werkstoffbahn, die an ihrem freien Ende ein beispielsweise nach Art einer Haltestange ausgebildetes Endelement mit Befestigungsabschnitten zur Festlegung in Kfz-seitigen Aufnahmen aufweist, wobei den Aufnahmen jeweils ein Einführkanal für die Befestigungsabschnitte zugeordnet ist, der zu einem Rastsitz führt, und der durch ein zwischen einer Sperrposition und einer Freigabeposition verlagerbares Sperrelement zumindest teilweise verschließbar ist, wobei das in seiner Sperrposition befindliche Sperrelement in die Bewegungsbahn des jeweiligen Befestigungsabschnittes hineinragt und eine Steuerfläche für den Befestigungsabschnitt aufweist, und wobei an dem Endelement ein Betätigungselement zur Verlagerung des Sperrelementes in seine Freigabeposition angeordnet ist.

Des Einführkanal der Aufnahme ist mittels eines zwischen einer Sperrposition und einer Freigabeposition verlagerbaren Sperrelementes zumindest teilweise verschließbar auszubilden. Das Sperrelement ist der Aufnahme zugeordnet und ragt in die Bewegungsbahn des jeweiligen Befestigungsabschnittes hinein. Dadurch, daß das verlagerbare Sperrelement der Aufnahme zugeordnet ist, kann dieses besonders einfach ausgebildet werden und den Einführkanal für den Befestigungsabschnitt derart verschließen, daß der in seinem Rastsitz angeordnete Befestigungsabschnitt dort gefangen, insbesondere umgriffen werden kann. Auf diese Weise können sehr große Flächenbereiche des Sperrelementes und des Befestigungsabschnittes miteinander in Kontakt geraten. Das Sperrelement kann dabei besonders stabil, insbesondere starr, ausgebildet werden, wodurch eine insbesondere crashsichere Arretierung des Endelementes an der Kfz-seitigen Aufnahme möglich wird.

Außerdem besteht erfindungsgemäß die Möglichkeit, auf bekannte Bauelemente, beispielsweise auf Haltestangen mit pilzförmig verbreiterten Endabschnitten, welche den Befestigungsabschnitt ausbilden, zurückzugreifen. Dies ermöglicht eine preisgünstige Konstruktion und eine einfache Montage.

Im Gegensatz zu der Kfz-Sicherheitseinrichtung gemäß DE 199 49 417 C2 ist keine Steckverbindung vorgesehen, die auf dem Haltestangenende zugeordnete Steckelemente zurückgreift. Die bei der bekannten Kfz-Sicherheitseinrichtung vorgesehenen Riegelelemente sind innerhalb eines rohrförmigen Haltestangenelementes angeordnet und müssen dementsprechend klein dimensioniert werden, auch um den dort beschriebenen Einführtrichter entsprechend klein dimensiniert zu halten. Dementsprechend kann als Steckelement dort auch nur ein am Trichterboden oder in der Trichterspitze angeordnetes Steckelement vorgesehen sein.

Die erfindungsgemäße Lösung sieht ein Sperrelement vor, welches den gesamten Einführkanal für den Befestigungsabschnitt versperren kann, so daß das Sperrelement entsprechend groß dimensioniert werden kann. Nur eine derartig große Dimensionierung der Halteflächen des Sperrelementes und der Befestigungsabschnitte führt zu der Möglichkeit, die Aufnahme crashsicher auszubilden.

Darüber hinaus bietet die erfindungsgemäße Lösung die Möglichkeit, das Sperrelement auf einfache Weise mit einem Betätigungsansatz zu versehen, an dem ein Löseelement angreifen kann. Durch eine entsprechende große Dimensionierung der Bauteile, insbesondere des Sperrelementes, können die Fertigungs- und Montagetoleranzen entsprechend großzügig gewählt werden. Dies bietet erhebliche Vorteile sowohl bei der Fertigung wie auch bei der Montage der erfindungsgemäßen Kfz-Sicherheitseinrichtung. Insbesondere bietet die erfindungsgemäße Lösung den Vorteil größerer Toleranzen bei der Konstruktion der Aufnahme, was bei der Montage in einem Kfz von besonderem Vorteil ist. Die Befestigungsabschnitte können jedoch in üblicher Bauform verhältnismäßig klein gehalten werden, da die den Befestigungsabschnitten zugeordneten Halteflächen, die zur Rastbefestigung beitragen, nunmehr von den Außenseiten der Befestigungsabschnitte bereitgestellt werden können. Die Außenflächen nehmen jedoch gegenüber dem Stand der Technik naturgemäß eine größere Fläche ein, als im Innenraum der Befestigungsabschnitte angeordnete Flächen.

Darüber hinaus ist erfindungsgemäß vorgesehen, daß das Sperrelement eine Steuerfläche für den Befestigungsabschnitt aufweist, so daß eine beim Einhängen des Sicherheitsnetzes automatisch eine Schnappverriegelung auf einfache Weise realisiert werden kann.

Die Steuerfläche für den Befestigungsabschnitt bietet somit die Möglichkeit, insbesondere in Verbindung mit einem Einführtrichter, bei einem Einhängen des Sicherheitsnetzes für eine automatische Verriegelung zu sorgen, ohne daß der Benutzer einen umständlichen Einfädelvorgang vornehmen muß. Ein Einführtrichter kann in Kombination oder in Verlängerung des Einführkanals vorgesehen werden, und für eine automatische Zentrierung, und somit für eine Führung der Einführbewegung der Befestigungsabschnitte in die Aufnahme sorgen. Der Einhängvorgang wird auf diese Weise für den Benutzer deutlich erleichtert.

Das Sperrelement, welches von den Dimensionen her gegenüber dem Stand der Technik deutlich größer auslegbar ist, kann dabei auf besonders einfache Weise auch Steuerflächen für den Befestigungsabschnitt ausbilden.

Schließlich bietet die erfindungsgemäße Lösung auch die Möglichkeit, auf einfache Weise ein Betätigungselement vorzusehen, welches mittig zentral an dem Endelement angeordnet werden kann und mittels dem gemeinsam die an beiden axialen Endbereichen angeordneten Sperrelemente in ihre Lösestellung versetzt werden können.

Erfindungsgemäß ist das Sperrelement starr ausgebildet und insoweit sehr hoch belastbar. Es kann mit Federelementen in seine Sperrstellung hinein federbelastet werden, wobei die erfindungsgemäße Konstruktion auch vorteilhaft hinsichtlich der Anordnung der Federelemente ist. So können die Federelemente besondere Werkstoffbereiche des Sperrelementes kontaktieren. Diese Werkstoffbereiche können auf Grund einer möglichen großen Dimensionierung des Sperrelementes auf einfache Weise vorgesehen werden. Die Kfz-seitige Anordnung des Sperrelementes kann dabei auf besonders einfache Weise Montageraum für derartige Federelemente bereitstellen.

Gemäß einer vorteilhaften Ausgestaltung der Erfindung ist dem Endelement ein Handhabungsteil, insbesondere nach Art eines Griffteils, zugeordnet. Dies bietet die Möglichkeit, die Auszugsbewegung besonders komfortabel zu gestalten, insbesondere da dem Benutzer durch Vorsehung des Handhabungsteils ein einfacher Griffansatz geboten wird. Schließlich wird hiermit auch die Möglichkeit geboten, das Betätigungselement nahe dem Griffteil anzuordnen, so daß die Handhabung weiter vereinfacht wird.

Gemäß einer weiteren vorteilhaften Ausgestaltung der Erfindung ist das Betätigungselement unmittelbar benachbart dem Griffteil angeordnet. Diese Ausführungsform berücksichtigt die Möglichkeit, daß ein Benutzer nun mit Erfassen des Griffteils das Betätigungselement auf einfache Weise zugleich mit erreicht. Insbesondere kann das Betätigungselement Bestandteil des Griffteils sein, und beispielsweise direkt neben einem Griffsteg, d.h. benachbart einer Durchgriffsöffnung angeordnet sein. Zum Verlagern der Sperrelemente in ihre Freigabeposition kann der Benutzer beispielsweise komfortabel das Griffteil ergreifen und das Betätigungselement betätigen. Ohne das Griffteil loszulassen, hat er das Endelement sicher gegriffen und kann nachfolgend eine Verlagerung des Sicherheitsnetzes in seine aufgewickelte Ruheposition durchführen.

Gemäß einer weiteren vorteilhaften Ausgestaltung der Erfindung ist das Sperrelement schwenkbar ausgebildet. Dies ermöglicht eine besonders einfache Ausbildung des Sperrelementes, insbesondere nach Art einer Klaue. Außerdem wird so eine besonders einfache Konstruktion und die Bereitstellung von großflächigen Halteflächen möglich, so daß eine besonders stabile Konstruktion erreichbar ist. Schließlich bietet die schwenkbare Ausbildung des Sperrelementes auch den Vorteil einer besonders einfachen Betätigung durch ein Löseelement.

Gemäß einer weiteren vorteilhaften Ausgestaltung der Erfindung umgreift das Sperrelement mit seiner Innenseite eine Außenfläche des insbesondere pilzartig ausgebildeten Befestigungsabschnittes. Dies ermöglicht eine besonders stabile Ausbildung bei einfacher Konstruktion.

Weitere Vorteile ergeben sich aus den nicht zitierten Unteransprüchen sowie an Hand der nun folgenden Beschreibung eines in den Zeichnungen dargestellten Ausführungsbeispiels. In den Figuren zeigen:
- Fig. 1: schematisch in perspektivischer Explosionsansicht in abgebrochener Darstellung den linken oberen Eckbereich eines Kfz-Sicherheitsnetzes und dessen Endelement, einen Ausschnitt der karosserieseitig angeordneten Innenverkleidung und eine Halterung mit einer Aufnahme,
- Fig. 2: das Ausführungsbeispiel gemäß Fig. 1 mit einem isoliert dargestellten Blendenteil für das Endelement und einem Übertragungsgestänge von einem Betätigungselement zu einem Löseelement,
- Fig. 3: schematisch in teilgeschnittener Ansicht das Endelement und die Aufnahme in montiertem Zustand etwa gemäß Schnittlinie III-III in Fig. 1 und
- Fig. 4: in einer Darstellung gemäß Fig. 3 die erfindungsgemäße Kfz-Sicherheitseinrichtung mit einem in seine Freigabeposition verschwenkten Sperrelement.

Die in ihrer Gesamtheit in den Figuren mit 10 bezeichnete Kfz-Sicherheitseinrichtung ist nur teilweise dargestellt.

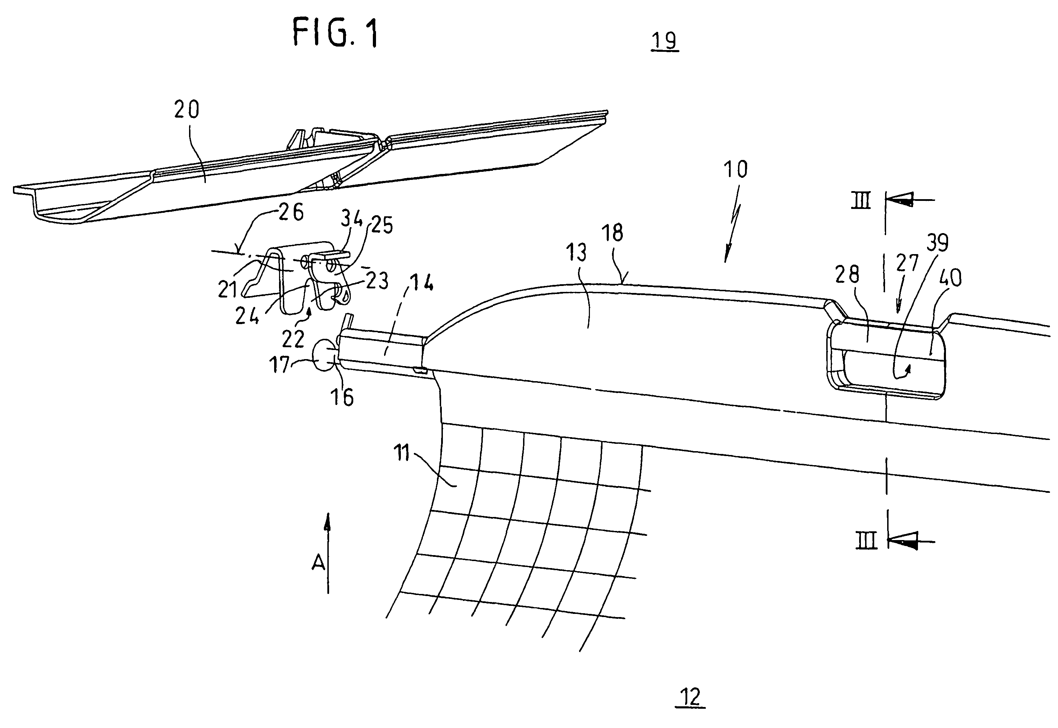

Fig. 1 zeigt schematisch in perspektivischer Ansicht den Einhängebereich eines Kfz-Sicherheitsnetzes, etwa in Blickrichtung eines Benutzers bei geöffneter Kfz-Hecktür in den Laderaum etwa schräg links nach vorn in Fahrtnchtung.

Die Kfz-Sicherheitseinrichtung 10 umfaßt ein Netz 11 mit einer Vielzahl von Maschen. Das Netz 11 wird auf eine nicht dargestellte Wickelwelle aufgewickelt, die beispielsweise in einem Rollogehäuse angeordnet ist, welches im Bereich der Rückenlehne befestigt wird. Die Wickelwelle befindet sich demnach unterhalb des mit der Positionsziffer 12 bezeichneten Bereiches und kann etwa entlang dem Pfeil A in Auszugsrichtung von dem Gehäuse weg ausgezogen werden.

An dem bezüglich Fig. 1 oberen freien Ende des Netzes 11 ist ein Endelement 13 angeordnet. Beim Ausführungsbeispiel handelt es sich dabei um eine Haltestange 14, die von einem Blendenelement 15 übergriffen wird und auf diese Weise das Endelement 13 bildet. Die Haltestange 14 weist an ihren beiden axialen Enden jeweils einen Befestigungsabschnitt 16 auf, der beim Ausführungsbeispiel ein pilzförmig verdicktes Ende 17 umfaßt. In Fig. 1 ist lediglich das linke, axiale Ende des Endelementes 13 dargestellt.

Das Blendenelement 15 weist eine Kontur 18 auf, die an die Innenkrümmung des nicht dargestellten Fahrzeughimmels, welcher sich etwa bei der Positionsziffer 19 befindet, angepaßt ist. Die axiale Länge des Endelementes 13 entspricht im wesentlichen der Fahrzeugbreite, so daß der freie Raum zwischen dem Himmel 19 und einer nicht dargestellten Rückenlehne des Fahrzeuges nahezu vollständig verschlossen werden kann.

Dem Endelement 13 ist ein Gnffteil 27 zugeordnet, welches durch Vorsehen einer Öffnung 39 und eines Griffstegs 40 gebildet wird. Der Benutzer kann auf diese Weise durch Ergreifen des Griffteils 27 die Werkstoffbahn 11 bequem ausziehen.

Im Bereich des nicht dargestellten Dachhimmels 19 bzw. im Bereich der Fahrzeugseitenwände ist eine Seitenverkleidung 20 angeordnet, die insbesondere von einer Blechkonstruktion gebildet werden kann. Die Seitenverkleidung 20 ist somit karosserieseitig festgelegt bzw. Bestandteil der Karosserie.

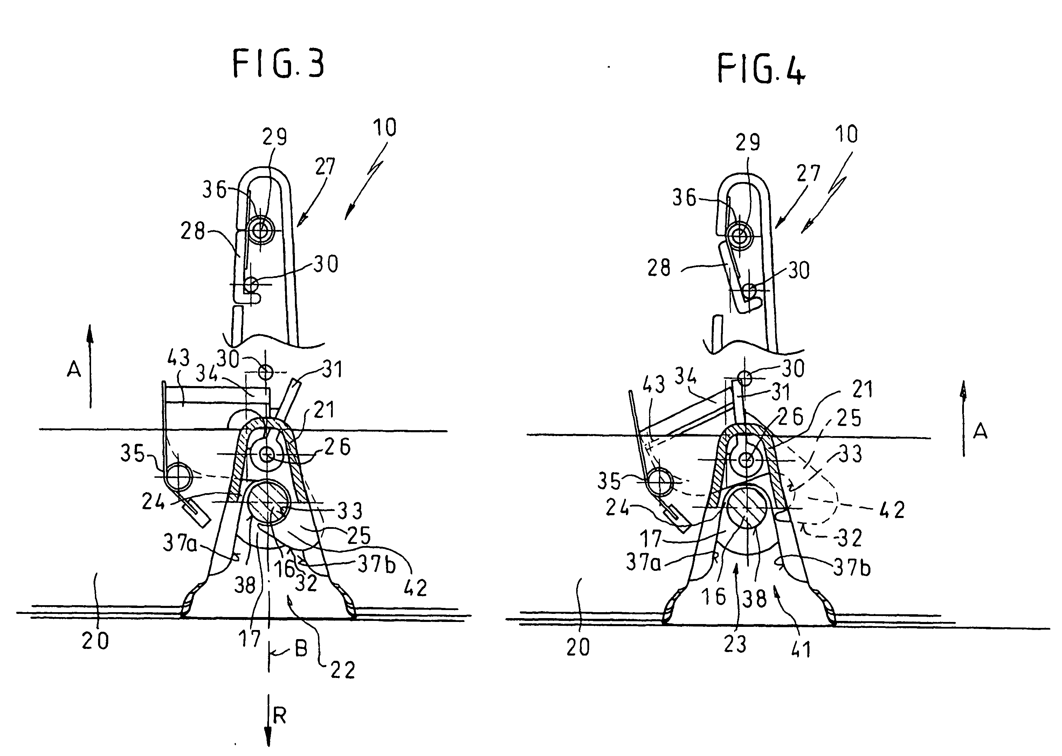

An der Seitenverkleidung 20 kann eine Halterung 21 befestigt werden, welche die Aufnahme 22 aufweist Die Aufnahme 22 ist im wesentlichen als keilförmig zulaufende Öffnung gemäß den Fig. 3 und 4 ausgebildet. Sie umfaßt einen Einführkanal 23, der zu einem Rastsitz 24 für den Befestigungsabschnitt 16 führt.

Als Einführkanal 23 wird somit gemäß Fig. 4 der Teil der Aufnahme 22 bezeichnet, der sich zwischen dem Rastsitz 24 und einer Einführöffnung 41 der Aufnahme 22 befindet.

Der Aufnahme 22 ist ein beim Ausführungsbeispiel klauenartig ausgebildetes Sperrelement 25 zugeordnet. Das Sperrelement 25 ist um eine Achse 26 schwenkbar an der Halterung 21 und somit an der Seitenverkleidung 20 befestigt. Das Sperrelement 25 umfaßt einen Klauenansatz 42 und einen Betätigungsansatz 34, auf dessen Bedeutung später noch eingegangen wird.

Fig. 3 zeigt das Sperrelement 25 in seiner Sperrposition. Eine Bewegung des in dem Rastsitz 24 angeordneten Befestigungsabschnittes 16 bzw. des Endelementes 13 entlang dem Pfeil R, also in Richtung hin zu dem nicht dargestellten Rollogehäuse, ist in dieser Situation nicht möglich. Das Sperrelement 25 umgreift den Befestigungsabschnitt 16 derart, daß seine Haltefläche 33 an der Außenfläche 38 des Befestigungsabschnittes anliegt. Auf Grund der geometrischen, insbesondere gekrümmten Anordnung der Haltefläche 33 und einer entsprechenden Wahl der Anordnung der Schwenkachse 26 des Sperrelementes 25 ist der Befestigungsabschnitt 16 von dem Sperrelement 25 gefangen.

Im folgenden soll zunächst erklärt werden, wie bei einem Einhängen des Sicherheitsnetzes 11 die in Fig. 3 dargestellte Position erreicht werden kann. Hierzu stelle man sich eine Situation vor, bei der der in Fig. 3 dargestellte Befestigungsabschnitt 16 bezüglich Fig. 3 unterhalb der Aufnahme 22 angeordnet ist und gerade in die Aufnahme 22 hinein, im wesentlichen entlang der Richtung A, eingeführt wird:

Auf Grund der Zentrierflächen 37a und 37b, die der Aufnahme 22 zugeordnet sind, wird zunächst dafür gesorgt, daß der Befestigungsabschnitt 16 entlang einer im wesentlichen geradlinigen Bewegungsbahn B (gestrichpunktet angedeutet) in die Aufnahme 22 hinein bewegt wird. Die Zentrierflächen 37a, 37b können dabei beispielsweise Zentrierflächen sein, die unmittelbar mit dem Befestigungsabschnitt 16 zusammenwirken. Es kann jedoch auch daran gedacht werden, die Zentrierflächen 37a, 37b zum Zusammenwirken mit dem pilzartig verdickten Ende 17 oder zum Zusammenwirken mit einem Bestandteil des Blendenelementes 13 auszubilden.

Bei fortlaufender Bewegung des Befestigungsabschnittes 16 stößt dieser auf eine Steuerfläche 32 des Sperrelementes 25. Die Steuerfläche 32 ist derart zu der Bewegungsbahn B geneigt und reicht derart in die Bewegungsbahn B hinein, daß eine weitere Bewegung des Befestigungsabschnittes 16 entlang der Richtung A für eine Verschwenkung des Sperrelementes 25 entgegen dem Uhrzeigersinn um die Schwenkachse 26 herum sorgt, so daß der klauenartige Ansatz 42 von der Aufnahme 22 weg geschwenkt wird. Die Bewegungsbahn B des Befestigungsabschnitts ist nunmehr freigegeben, so daß der Befestigungsabschnitt seinen Rastsitz 24 erreichen kann und eine Freigabestellung des Sperrelementes 25 erreicht wird, wie sie etwa in Fig. 4 dargestellt ist.

Ein karosserieseitig festgelegtes Federelement 35 wirkt mit seinem langen, bezüglich der Fig. 3 und 4 oberen Federschenkel derart auf einen Werkstoffbereich 43 des Sperrelementes 25, daß dieses nunmehr in seine Sperrposition gemäß Fig. 3 hinein zurückverschwenkt wird, also eine Verschwenkung um die Schwenkachse 26 im Uhrzeigersinn durchläuft. Schließlich wird die in Fig. 3 dargestellte Position erreicht. Das Federelement 35 sorgt ständig dafür, daß das Sperrelement 25 in seine Sperrposition hinein belastet ist, so daß das Sicherheitsnetz 11 in seiner aufgespannten Position dauerhaft arretiert ist.

Im folgenden soll der Mechanismus zum Entriegeln des Sperrelementes 25 beschrieben werden.

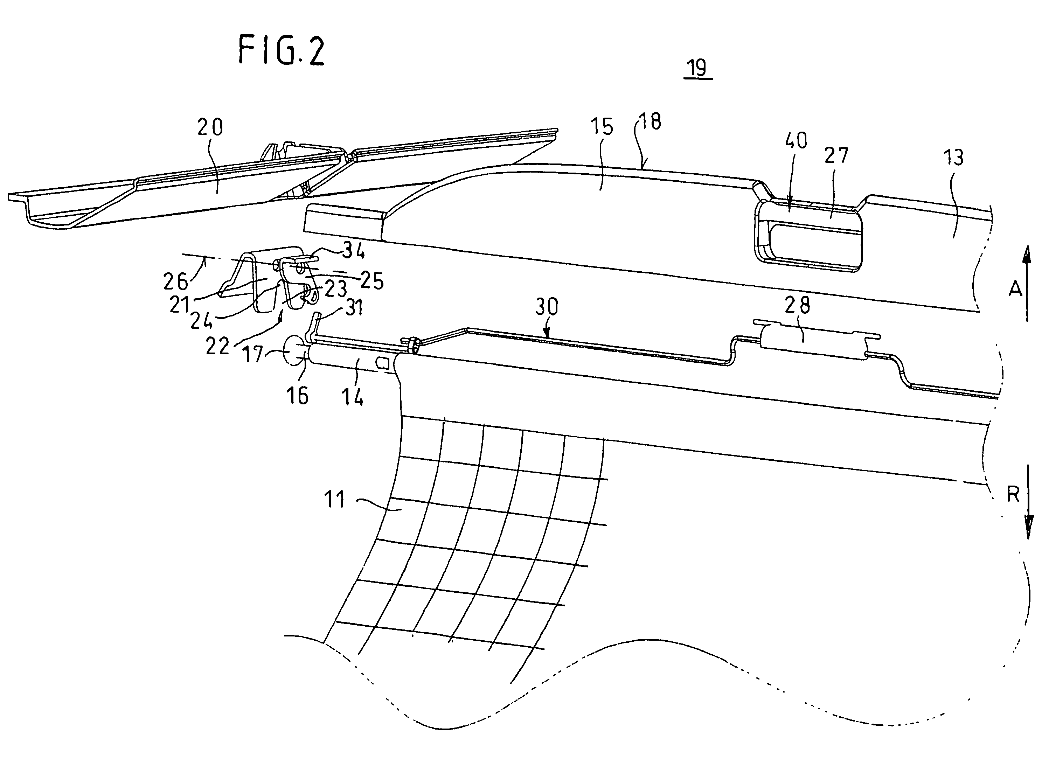

Fig. 2 zeigt, daß ein Betätigungselement 28 an dem Endelement 13 angeordnet ist. Das Betätigungselement 28 ist um eine Schwenkachse 29 (Fig. 4) schwenkbar und wird von einer Feder 36 ständig in seine in Fig. 3 dargestellte Ruheposition hinein belastet. Fig. 1 zeigt deutlich, daß das Betätigungselement 28 unmittelbar nahe des Griffteils 27 angeordnet ist, so daß eine sehr komfortable Handhabung des Betätigungselementes 28 möglich ist.

Gemäß Fig. 2 ist das Betätigungselement 28 über ein Gestänge 30 mit einem Löseelement 31 verbunden. Das Löseelement 31 ist dabei als um eine Schwenkachse 26 verschwenkbarer Hebel ausgebildet, der mit einem Betätigungsansatz 34 des Sperrelementes 25 zusammenwirken kann. Bei dem Ausführungsbeispiel ist die Schwenkachse des Löseelementes 31 mit der Schwenkachse 26 des Sperrelementes 25 identisch, was besondere Vorteile, insbesondere hinsichtlich einer einfachen Konstruktion, bietet.

Fig. 3 zeigt ein Sperrelement 25 in seiner Sperrposition, in der es den Befestigungsabschnitt 16 gefangen hält. Das Löseelement 31 ist hier von dem Befestigungsansatz 34 zunächst beabstandet.

Wird nun von einem Benutzer das Betätigungselement 28 aus seiner Position in Fig. 3 entgegen dem Uhrzeigersinn um die Schwenkachse 29 herum in eine Position gemäß Fig. 4 verschwenkt, so wird auf Grund des Gestänges diese Bewegung auf das Löseelement 31 übertragen. Das Löseelement 31 wirkt mit dem Betätigungsansatz 34 des Sperrelementes 25 dabei derart zusammen, daß eine Schwenkbewegung des Löseelementes 31 entgegen dem Uhrzeigersinn um die Schwenkachse 26 herum zugleich eine Schwenkbewegung des Sperrelementes 25 entgegen dem Uhrzeigersinn um die Schwenkachse 26 herum zur Folge hat Auf diese Weise kann das Löseelement 31 das Sperrelement 25 in seine in Fig. 4 dargestellte Freigabeposition verschwenken, so daß der Befestigungsabschnitt 16 freigegeben ist.

Zum Einhängen eines Sicherheitsnetzes 11 in die Kfz-seitigen Aufnahmen 22 muß ein Benutzer das Endelement 13 an dem Griffteil 27 lediglich ergreifen und das Netz 11 in Auszugsrichtung A ausziehen, bis die Aufnahme 22 erreicht wird. Bei fortwährender Auszugsbewegung wird auf Grund der oben beschriebenen schnappfallenartigen Anordnung der Befestigungsabschnitt 16 des Endelementes 13 automatisch in seinem Rastsitz 24 gefangen. Das Netz 11 ist auf diese Weise in seiner ausgezogenen Position dauerhaft sicher arretiert.

Zum Lösen der Sperrelemente 25 ergreift der Benutzer wiederum das Griffteil 27 und betätigt das Betätigungselement 28. Dies hat eine Verschwenkung der Sperrelemente 25 in ihre jeweilige Freigabeposition zur Folge, so daß die Befestigungsabschnitte 16 die Aufnahme 22 verlassen können. Da der Benutzer ohnehin an dem Griffsteg 40 des Griffteils 27 angegriffen hat, kann er in einer weiteren Einzugsbewegung des Netzes 11, etwa im wesentlichen entlang der Richtung R, das Endelement 13 zum nicht dargestellten Rollogehause bzw. zu der Wickelwelle hin bewegen, wobei sich das Netz 11 aufwickelt. Er kann dabei mit einem einzigen Griff das Endelement 13 erfassen, die an beiden axialen Endbereichen des Endelementes 13 angeordneten Sperrelemente 25 in ihre Freigabestellung verlagern und zugleich das Endelement 13 zurückführen. Die Handhabung ist sowohl beim Einhängen des Netzes 11 wie auch beim Entriegeln denkbar einfach und unkompliziert.

Dadurch, daß die Außenseiten 38 der Befestigungsabschnitte 16 von dem Sperrelement 25 umgriffen werden, stehen darüber hinaus sehr großflächige Halteflächen 33 bzw. 38 zur Verfügung. Die Anordnung kann daher auf besonders einfache Weise crashsicher ausgebildet werden, d.h. die Kräfte, die erforderlich sind, um das Endelement 13 aus der in Fig. 3 dargestellten Halteposition heraus gewaltsam zu lösen, übersteigen die üblicherweise bei einem Kfz-Unfall auftretenden Kräfte.

Darüber hinaus ermöglicht die erfindungsgemäße Sicherheitseinrichtung 10 eine besonders einfache Konstruktion und eine einfache Montage, so daß insgesamt eine preisgünstige Herstellung möglich ist.

## Patentansprüche

1. Kfz-Sicherheitseinrichtung (10), insbesondere Sicherheitsnetz zur Abtrennung eines Laderaumes von einer Fahrgastzelle, mit einer von einer Wickelwelle abziehbaren Werkstoffbahn (11), die an ihrem freien Ende ein beispielsweise nach Art einer Haltestange ausgebildetes Endelement (13) mit Befestigungsabschnitten (16) zur Festlegung in Kfz-seitigen Aufnahmen (22) aufweist, wobei den Aufnahmen jeweils ein Einführkanal (23) für die Befestigungsabschnitte zugeordnet ist, der zu einem Rastsitz (24) führt, und der durch ein zwischen einer Sperrposition und einer Freigabeposition verlagerbares Sperrelement (25) zumindest teilweise verschließbar ist, wobei das in seiner Sperrposition befindliche Sperrelement (25) in die Bewegungsbahn (B) des jeweiligen Befestigungsabschnittes (16) hineinragt und eine Steuerfläche (32) für den Befestigungsabschnitt (16) aufweist, **dadurch gekennzeichnet, daß** an dem Endelement (13) ein Betätigungselement (28) zur Verlagerung des Sperrelementes (25) in seine Freigabeposition angeordnet ist.

2. Kfz-Sicherheitseinrichtung nach Anspruch 1, **dadurch gekennzeichnet, daß** das Sperrelement (25) Kfz-seitig angeordnet ist.

3. Kfz-Sicherheitseinrichtung nach Anspruch 1 oder 2, **dadurch gekennzeichnet, daß** dem Sperrelement (25) ein Betätigungsansatz (34) zugeordnet ist, der mit einem Löseelement (31) und zumindest mittelbar mit dem Betätigungselement (28) zusammenwirkt.

4. Kfz-Sicherheitseinrichtung nach einem der vorangegangenen Ansprüche, **dadurch gekennzeichnet, daß** an dem Endelement (13) axial endseitig zwei Befestigungsabschnitte (16) angeordnet sind.

5. Kfz-Sicherheitseinrichtung nach einem der vorangegangenen Ansprüche, **dadurch gekennzeichnet, daß** zwei Sperrelemente (25) vorgesehen sind und den beiden Sperrelementen (25) ein gemeinsames Betätigungselement (28) zugeordnet ist.

6. Kfz-Sicherheitseinrichtung nach einem der vorangegangenen Ansprüche, **dadurch gekennzeichnet, daß** dem Endelement (13) ein Handhabungsteil, insbesondere nach Art eines Griffteils (27) zugeordnet ist.

7. Kfz-Sicherheitseinrichtung nach Anspruch 6, **dadurch gekennzeichnet, daß** das Betätigungselement (28) dem Griffteil (27) unmittelbar benachbart angeordnet ist.

8. Kfz-Sicherheitseinrichtung nach einem der vorangegangenen Ansprüche, **dadurch gekennzeichnet, daß** das Betätigungselement (28) schwenkbar ausgebildet ist.

9. Kfz-Sicherheitseinrichtung nach einem der vorangegangenen Ansprüche, **dadurch gekennzeichnet, daß** das Sperrelement (25) schwenkbar ausgebildet ist.

10. Kfz-Sicherheitseinrichtung nach einem der vorangegangenen Ansprüche, **dadurch gekennzeichnet, daß** das Sperrelement (25) in seine Sperrposition hinein belastet, insbesondere federbelastet ist.

11. Kfz-Sicherheitseinrichtung nach einem der vorangegangenen Ansprüche, **dadurch gekennzeichnet, daß** dem Einführkanal (23) ein Einführtrichter (37a, 37b) zugeordnet ist.

12. Kfz-Sicherheitseinrichtung nach einem der vorangegangenen Ansprüche, **dadurch gekennzeichnet, daß** das Sperrelement (25) im wesentlichen klauenartig ausgebildet ist.

13. Kfz-Sicherheitseinrichtung nach einem der vorangegangenen Ansprüche, **dadurch gekennzeichnet, daß** das Sperrelement (25) mit seiner Innenseite (33) eine Außenfläche (38) des insbesondere pilzartig ausgebildeten Befestigungsabschnittes (16) umgreift.

14. Kfz-Sicherheitseinrichtung nach einem der vorangegangenen Ansprüche, **dadurch gekennzeichnet, daß** sich der Einführkanal (23) zu einem Wickelwellengehäuse hin öffnet.

15. Kfz-Sicherheitseinrichtung nach einem der vorangegangenen Ansprüche, **dadurch gekennzeichnet, daß** das Betätigungselement (28) im wesentlichen mittig zentral an dem Endelement (13) angeordnet ist.

## Claims

1. Motor vehicle safety device (10), in particular safety net for separating a luggage space from a passenger compartment, with a material web (11) which can be drawn off a winding shaft and comprises at its free end a terminal element (13) which is formed, for example, like a handrail and has fastening portions (16) for securing in retainers (22) on the motor vehicle side, wherein a respective insertion channel (23) for the fastening portions is associated with the retainers, which channel leads to a stop seat (24) and can be closed at least partly by a blocking element (25) which can be displaced between a blocking position and a release position, wherein the blocking element (25), located in its blocking position, projects into the path of movement (B) of the respective fastening portion (16) and comprises a control face (32) for the fastening portion (16), **characterised in that** an actuating element (28) for displacing the blocking element (25) into its release position is disposed at the terminal element (13).

2. Motor vehicle safety device according to Claim 1, **characterised in that** the blocking element (25) is disposed on the motor vehicle side.

3. Motor vehicle safety device according to Claim 1 or 2, **characterised in that** an actuating shoulder (34) is associated with the blocking element (25), which shoulder co-operates with a release element (31) and at least indirectly with the actuating element (28).

4. Motor vehicle safety device according to any one of the preceding Claims, **characterised in that** two fastening portions (16) are disposed at the axial ends of the terminal element (13).

5. Motor vehicle safety device according to any one of the preceding Claims, **characterised in that** two blocking elements (25) are provided, and a common actuating element (28) is associated with the two blocking elements (25).

6. Motor vehicle safety device according to any one of the preceding Claims, **characterised in that** a handling part, in particular like a handle part (27), is associated with the terminal element (13).

7. Motor vehicle safety device according to Claim 6, **characterised in that** the actuating element (28) is disposed directly adjacent to the handle part (27).

8. Motor vehicle safety device according to any one of the preceding Claims, **characterised in that** the actuating element (28) is formed so as to be pivotable.

9. Motor vehicle safety device according to any one of the preceding Claims, **characterised in that** the blocking element (25) is formed so as to be pivotable.

10. Motor vehicle safety device according to any one of the preceding Claims, **characterised in that** the blocking element (25) is loaded into its blocking position, in particular spring-loaded.

11. Motor vehicle safety device according to any one of the preceding Claims, **characterised in that** an insertion cone (37a, 37b) is associated with the insertion channel (23).

12. Motor vehicle safety device according to any one of the preceding Claims, **characterised in that** the blocking element (25) is of substantially claw-like formation.

13. Motor vehicle safety device according to any one of the preceding Claims, **characterised in that** the blocking element (25) embraces by way of its inside (33) an outer face (38) of the fastening portion (16), which is of substantially mushroom-like formation.

14. Motor vehicle safety device according to any one of the preceding Claims, **characterised in that** the insertion channel (23) opens towards a winding shaft housing.

15. Motor vehicle safety device according to any one of the preceding Claims, **characterised in that** the actuating element (28) is disposed substantially centrally at the terminal element (13).

## Revendications

1. Dispositif de sécurité (10) pour véhicule automobile, notamment filet de sécurité pour séparer un compartiment à bagages d'un compartiment passagers, avec une bande de matériau (11) qui peut être dévidée d'un arbre d'enroulement et qui présente à son extrémité libre un élément terminal (13) réalisé par exemple à la manière d'une barre de fixation et pourvu de parties de fixation (16) pour l'immobilisation dans des logements (22) prévus sur le véhicule, sachant qu'un canal d'introduction respectif (23) pour les parties de fixation est associé aux logements, canal qui mène à un siège de crantage (24) et qui peut être fermé au moins partiellement par un élément de verrouillage (25) pouvant être déplacé entre une position de verrouillage et une position de libération, et sachant que l'élément de verrouillage (25) se trouvant dans sa position de verrouillage pénètre dans la voie de déplacement (B) de la partie de fixation respective (16) et présente une surface de commande (32) pour la partie de fixation (16), **caractérisé en ce qu'**un élément d'actionnement (28) pour déplacer l'élément de verrouillage (25) dans sa position de libération est disposé sur l'élément terminal (13).

2. Dispositif de sécurité pour véhicule automobile selon la revendication 1, **caractérisé en ce que** l'élément de verrouillage (25) est disposé sur le véhicule automobile.

3. Dispositif de sécurité pour véhicule automobile selon la revendication 1 ou 2, **caractérisé en ce qu'**un appendice d'actionnement (34) est associé à l'élément de verrouillage (25), et il coopère avec un élément de libération (31) et au moins indirectement avec l'élément d'actionnement (28).

4. Dispositif de sécurité pour véhicule automobile selon l'une des revendications précédentes, **caractérisé en ce que** deux parties de fixation (16) sont disposées sur l'élément terminal (13), à ses extrémités axiales.

5. Dispositif de sécurité pour véhicule automobile selon l'une des revendications précédentes, **caractérisé en ce qu'**il est prévu deux éléments de verrouillage (25), et un élément d'actionnement commun (28) est associé aux deux éléments de verrouillage (25).

6. Dispositif de sécurité pour véhicule automobile selon l'une des revendications précédentes, **caractérisé en ce qu'**une partie de manipulation, notamment à la manière d'une partie formant poignée (27), est associée à l'élément terminal (13).

7. Dispositif de sécurité pour véhicule automobile selon la revendication 6, **caractérisé en ce que** l'élément d'actionnement (28) est disposé au voisinage immédiat de la partie formant poignée (27).

8. Dispositif de sécurité pour véhicule automobile selon l'une des revendications précédentes, **caractérisé en ce que** l'élément d'actionnement (28) est réalisé pivotant.

9. Dispositif de sécurité pour véhicule automobile selon l'une des revendications précédentes, **caractérisé en ce que** l'élément de verrouillage (25) est réalisé pivotant.

10. Dispositif de sécurité pour véhicule automobile selon l'une des revendications précédentes, **caractérisé en ce que** l'élément de verrouillage (25) est sollicité vers sa position de verrouillage, notamment par ressort.

11. Dispositif de sécurité pour véhicule automobile selon l'une des revendications précédentes, **caractérisé en ce qu'**un cône d'introduction (37a, 37b) est associé au canal d'introduction (23).

12. Dispositif de sécurité pour véhicule automobile selon l'une des revendications précédentes, **caractérisé en ce que** l'élément de verrouillage (25) est réalisé sensiblement en forme de griffe.

13. Dispositif de sécurité pour véhicule automobile selon l'une des revendications précédentes, **caractérisé en ce que** l'élément de verrouillage (25) s'engage par son côté intérieur (33) autour d'une surface extérieure (38) de la partie de fixation (16) réalisée notamment en forme de champignon.

14. Dispositif de sécurité pour véhicule automobile selon l'une des revendications précédentes, **caractérisé en ce que** le canal d'introduction (23) s'ouvre en direction d'un boîtier d'arbre d'enroulement.

15. Dispositif de sécurité pour véhicule automobile selon l'une des revendications précédentes, **caractérisé en ce que** l'élément d'actionnement (28) est disposé sensiblement au milieu, en position centrale, sur l'élément terminal (13).
